# EUROPÄISCHE PATENTANMELDUNG

(11) **EP 1 251 031 A1**
(43) Veröffentlichungstag der Anmeldung: **23.10.2002**
(21) Anmeldenummer: 02008523.9
(22) Anmeldetag: 15.04.2002
(51) Int. Cl.: B60P 3/025, B65G 53/02, A47F 10/06

(54) **Mobile gastronomische Einheit zur Verpflegung und Bewirtung**

(30) Priorität: 20.04.2001 DE 20106889 U
(71) Anmelder: B.D.O.-Gastro-Service GmbH, 68766 Hockenheim (DE)
(72) Erfinder: Ott, Bernd-Dieter, 69168 Baiertal (DE)
(74) Vertreter: Kruspig, Volkmar, Dipl.-Ing.

(57) **Zusammenfassung**

Die Erfindung betrifft eine mobile gastronomische Einheit zur Verpflegung und Bewirtung, umfassend einen Trailer oder ein Kraftfahrzeug mit Aufbauten, wobei der Trailer oder die Aufbauten Vorrichtungen zum Vor-, Aufbereiten, Präsentieren und Servieren von Speisen und/oder Getränken, Sitzgelegenheiten für Gäste, Medienversorgungsanschlüsse und/oder Behältnisse für Frisch- und Brauchwasser sowie eine Überdachung aufweisen. Erfindungsgemäß ist im Thekenbereich ein eine Flüssigkeit führender, umlaufender, offener Kanal vorgesehen, wobei der flüssigkeitsgefüllte Kanal Boote, Flöße oder dergleichen Transportmittel aufweist, welche einen Raum zur Aufnahme mindestens einer Schale, einer Speise und/oder eines Getränks besitzen.

## Beschreibung

Die Erfindung betrifft eine mobile gastronomische Einheit zur Verpflegung und Bewirtung, umfassend einen Trailer oder ein Kraftfahrzeug mit Aufbauten, wobei der Trailer oder die Aufbauten Vorrichtungen zum Vor-, Aufbereiten, Präsentieren und Servieren von Speisen und/oder Getränken, Sitzgelegenheiten für Gäste, Medienversorgungsanschlüsse und/oder Behältnisse für Frisch- und Brauchwasser sowie eine Überdachung aufweisen, gemäß Oberbegriff des Patentspruchs 1.

Mobile Gasto-Einheiten in Form von Anhängern, aber auch selbstfahrenden Kastenwagen sind bekannt.
Bei solchen Einheiten sind im Aufbau bzw. im Anhänger Vorrichtungen zum Aufbereiten, aber auch zum Präsentieren von Speisen enthalten, wobei diese Vorrichtungen auch Kochgelegenheiten oder eine Zapfanlage umfassen können. Im Regelfall besitzen die bekannten Einheiten keine integrierten Sitzgelegenheiten für Gäste, da auf einen Verzehr im Stehen abgestellt wird.

Auch sind spezielle Gastronomie-Fahrzeuge bekannt, die Aufbauten aufweisen, welche nach oben wegklappbare Bord- oder Seitenwände besitzen, um auf diese Weise ein schützendes Dach im Bereich der Ausgabe der Speisen bzw. Übergabe der Speisen an die Kunden zu bilden.

Das gastronomische Angebot mit derartigen bekannten Einrichtungen ist begrenzt und auf einfache Speisen und ein kleines Getränkesortiment orientiert. Ein längeres Verweilen ist nicht möglich, jedenfalls aber nicht sonderlich attraktiv. Zum Stand der Technik sei auf die FR 26 73 824 A1, FR 26 46 816 A1, US-RE 29 767 und die EP 11 66 688 A1 verwiesen.

Aus dem Vorgenannten ist es daher Aufgabe der Erfindung, eine weitergebildete mobile gastronomische Einheit zur Verpflegung und Bewirtung von Gästen anzugeben, die zum längeren Verweilen einlädt und welche über eine Originalität und Attraktivität verfügt, so dass eine hohe Gästefrequenz gegeben ist.
Die zu schaffende Einheit soll darüber hinaus die Speisen in einer neuartigen Form präsentieren, wobei die Art der Präsentation gleichzeitig Frische der Speisen symbolisieren soll.

Die Lösung der Aufgabe der Erfindung erfolgt mit einer mobilen gastronomischen Einheit zur Verpflegung und Bewirtung von Gästen gemäß den Merkmalen des Patentanspruchs 1, wobei die Unteransprüche mindestens zweckmäßige Ausgestaltungen und Weiterbildungen umfassen.

Demnach besteht der Grundgedanke darin, die gastronomische Einheit relativ großvolumig aufzubauen, beispielsweise auf einem LKW-Auflieger bzw. Trailer, so daß ein großzügiger Thekenbereich mit entsprechendem Platz für Gäste entsteht.

In einer Ausgestaltung der Erfindung sind die Seitenbordwände des Aufliegers nach unten klapp- oder schwenkbar und dienen der Aufnahme von Sitzgelegenheiten für die Gäste.
Hier ist auch eine Teilung der Bordwände dergestalt denkbar, daß ein in etwa hälftiges Klappen nach unten und ein ebenso mögliches Klappen nach oben erfolgt, so daß ein an sich bekanntes Vordach oder Schutzdach entsteht.

Im Thekenbereich, der sich bevorzugt entlang der Längsachse des Trailers erstreckt, ist ein eine Flüssigkeit führender umlaufender offener Kanal vorgesehen. Selbstverständlich können auch zwei oder mehrere Kanäle ausgebildet sein, ohne den Grundgedanken der Erfindung zu verlassen.

Der flüssigkeitsgefüllte Kanal nimmt Boote, Flöße oder dergleichen Transportmittel auf, welche einen Raum zur Aufnahme einer Speise und/oder eines Getränks besitzen.

Die Transportmittel können über eine eigene Antriebseinrichtung, insbesondere einen Elektromotor mit Schraube oder Strahldüse verfügen, wobei aber ebenso die Möglichkeit besteht, die Transportmittel über ein im Kanal verlegtes Seil oder eine Kette, das mit einer Antriebseinrichtung in Verbindung steht, in Bewegung zu versetzen.

Alternativ kann für eine gezielte Strömung der Flüssigkeit im Kanal gesorgt werden, um auf diese Weise die Transportmittel entlang des Kanals zu bewegen.

Die Gäste nehmen entlang der Theke Platz und können die Speisen, z.B. Sushi, nach Bedarf und Gefallen und/oder nach Bestellung entnehmen.

Der Flüssigkeitsstrom ist kühlbar, was besonders in warmen Tagen für die Präsentation von z.B. Sushi von Vorteil ist. Ebenso besteht die Möglichkeit, die Flüssigkeit mit einer lebensmittelverträglichen Farbe zu versetzen und/oder Beleuchtungsmittel im Kanal zu integrieren, um die Attraktivität der Darbietung der Speisen noch zu erhöhen.

Die Theke kann die Form eines langgestreckten, schmalen U besitzen, wobei der Kanal der U-Form folgen kann. Auch kann der Kanal geschlossen sein, um ein Umlaufen der Transportmittel, insbesondere Boote oder Flöße zu gewährleisten.

In einzelnen Abschnitten des Kanals können weitere seitliche Ausnehmungen vorgesehen werden, die die Möglichkeit geben, nach Art eines Hafens ein ausgewähltes Transportmittel festzuhalten, um es anschließend nach Entnahme der Speise oder des Getränks wieder der Strömung auszusetzen.

Insbesondere dienen die Transportmittel der Aufnahme von abnehmbaren Schälchen, nämlich Sushi-Schälchen. Die Schalen können eine unterschiedliche Farbe oder Form aufweisen, die z.B. je nach Preisklasse des angebotenen Produktes gewählt ist. Auf diese Weise kann dann anhand der Anzahl und der Art der Schalen der jeweilige Verzehr ermittelt werden.

In einer vorteilhaften Ausgestaltung können die Flöße aus einer Vielzahl von Esshilfestäbchen bevorzugt aus Holz gefertigt werden, was insbesondere dann einen positiven Bezug zu den Speisen schafft, wenn diese aus dem chinesischen oder japanischen Raum entlehnt sind.

Die Erfindung soll nachstehend anhand eines Ausführungsbeispiels sowie unter Zuhilfename einer Figur näher erläutert werden.

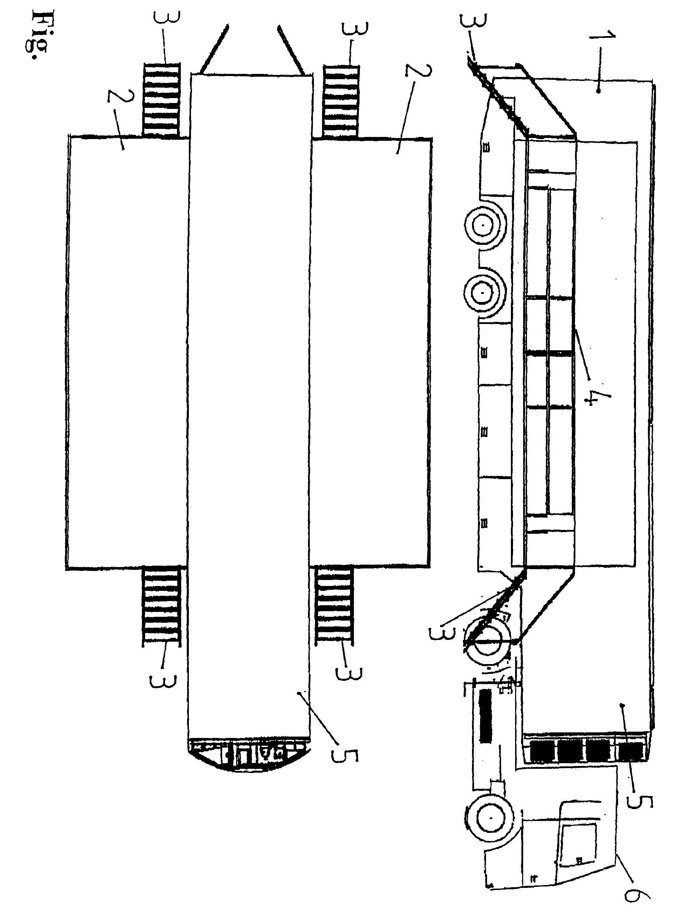

Die Figur zeigt hierbei eine Seitenansicht sowie eine Draufsicht auf einen LKW-Trailer, welcher die erfindungsgemäße mobile gastronomische Einheit zur Verpflegung und Bewirtung von Gästen darstellt.

Auf dem Trailer befindet sich ein langgestreckter kastenförmiger Aufbau 1 mit nach beiden Seiten klappbaren Bordwänden 2, die gleichzeitig eine Aufnahmefläche für nicht gezeigte Sitzgelegenheiten bilden.

Der Sitzbereich kann über Treppen 3 zugänglich gemacht werden. Ein langgestreckter Tresen 4 befindet sich innerhalb des kastenförmigen Aufbaus 1. Dieser Tresen 4 besitzt den zeichnerisch nicht dargestellten flüssigkeitsgefüllten Kanal zur Aufnahme von Transportmitteln, die wiederum zum Bewegen der Speisen, z.B. in Schälchen befindlicher Sushis dienen.

Im Vorderbereich 5 des kastenförmigen Aufbaus 1 sind die notwendigen Versorgungseinrichtungen und der Küchenraum untergebracht.

Die Medienversorgung des Trailers kann über externe Anschlüsse ausgeführt, aber auch über einen vorhandenen Generator sowie Brauch- und Frischwasserbehälter autark realisiert werden.

Das Zugfahrzeug 6 kann vom Trailer abgekoppelt und an geeigneter Stelle geparkt werden.

Bei dem vorgestellten Konzept wird von einer mobilen Einheit ausgegangen, jedoch ist der Gedanke des Ausbildens eines flüssigkeitsgefüllten Kanals zur Aufnahme von Transportmitteln für die Speisen ebenso in stationären Gastronomiebetrieben nutz- und übertragbar.

## Patentansprüche

1. Mobile gastronomische Einheit zur Verpflegung und Bewirtung, umfassend einen Trailer oder ein Kraftfahrzeug mit Aufbauten, wobei der Trailer oder die Aufbauten Vorrichtungen zum Vor-, Aufbereiten, Präsentieren und Servieren von Speisen und/oder Getränken, Sitzgelegenheiten für Gäste, Medienversorgungsanschlüsse und/oder Behältnisse für Frisch- und Brauchwasser sowie eine Überdachung aufweisen,
**dadurch gekennzeichnet, daß**
im Thekenbereich ein eine Flüssigkeit führender, umlaufender, offener Kanal vorgesehen ist, wobei der flüssigkeitsgefüllte Kanal Boote, Flöße oder dergleichen Transportmittel aufweist, welche einen Raum zur Aufnahme mindestens einer Schale, einer Speise und/oder eines Getränks besitzen.

2. Mobile gastronomische Einheit nach Anspruch 1,
**dadurch gekennzeichnet, daß**
die Transportmittel über eine Antriebseinrichtung, insbesondere einen Elektromotor mit Schraube oder Strahldüse verfügen.

3. Mobile gastronomische Einheit nach Anspruch 1,
**dadurch gekennzeichnet, daß**
die Transportmittel über ein im Kanal verlegtes Seil oder Kette oder über einen Magnetkontakt, das oder der mit einer Antriebsvorrichtung in Verbindung steht, in Bewegung versetzbar sind.

4. Mobile gastronomische Einheit nach Anspruch 1,
**dadurch gekennzeichnet, daß**
die Flüssigkeit im Kanal einer einstellbaren Strömung unterliegt.

5. Mobile gastronomische Einheit nach Anspruch 4,
**dadurch gekennzeichnet, daß**
mindestens einer Wasserstrahldüse und/oder Schraube zur Strömungserzeugung vorgesehen ist.

6. Mobile gastronomische Einheit nach einem der vorangegangen Ansprüche, **gekennzeichnet durch**
kastenförmige Aufbauten mit seitlich oder nach unten und/oder oben klappbaren Seitenbordwänden, welche im nach unten klappbaren Bereich zur Aufnahme der Sitzgelegenheiten dienen.

7. Mobile gastronomische Einheit nach Anspruch 6,
**dadurch gekennzeichnet, daß**
die Theke sich über die Längsachse des kastenförmigen Aufbaus erstreckt und beidseitig für Gäste zugänglich ist.

8. Mobile gastronomische Einheit nach Anspruch 7,
**dadurch gekennzeichnet, daß**
die Theke die Form eines langgestreckten, schmalen U besitzt.

9. Mobile gastronomische Einheit nach einem der vorangegangen Ansprüche,
**dadurch gekennzeichnet, daß**
auf den Transportmitteln entnehmbare Schälchen, insbesondere Sushi- Schälchen angeordnet sind.

10. Mobile gastronomische Einheit nach Anspruch 1,
**dadurch gekennzeichnet, daß**
das oder die Flöße aus einer untereinander verbundenen Menge von Esshilfestäbchen bestehen.

11. Mobile gastronomische Einheit nach Anspruch 9,
**dadurch gekennzeichnet, daß**
die Schälchen eine unterschiedliche Form und/oder Farbe aufweisen, welche je nach Wertigkeit der präsentierten Speise und/oder Getränks gewählt ist.
